# EUROPEAN PATENT SPECIFICATION

(11) **EP 2 530 302 B1**
(45) Date of publication and mention of the grant of the patent: **30.04.2014**
(21) Application number: 11168738.0
(22) Date of filing: 03.06.2011
(51) Int. Cl.: F03D 11/00, F03D 7/02

(54) **Wind turbine and control method for controlling the same**
Windturbine und Steuerverfahren zu ihrer Steuerung
Éolienne et procédé de contrôle associé

(43) Date of publication of application: 05.12.2012
(73) Proprietor: WILIC S.ÀR.L., 1528 Luxembourg (LU)
(72) Inventor: Casazza, Matteo, 39049 Val di Vizze (IT); Sabbadin, Amedeo, 35134 Padova (IT); Stockner, Gunther, 39040 Velturno (IT)
(74) Representative: Bergadano, Mirko

(56) References cited:
- WO-A1-2010/142759
- WO-A2-2009/068035
- GB-A- 2 465 790
- GB-A- 2 466 200
- US-A1- 2004 174 542
- US-A1- 2006 000 269

## Description

The present invention relates to a wind turbine. In particular, the present invention relates to a wind turbine including a control system for controlling the wind turbine, and to a method for controlling the wind turbine.

Generally, a wind turbine comprises a vertical support structure; a nacelle atop the support structure; a rotor rotatably fitted to the nacelle and including a hub, a plurality of blades rotatably fitted to the hub and a plurality of pitch actuators for adjusting the pitch angles of the blades. The wind turbines are normally controlled according to a control strategy based on one or more measured control parameters, such as wind speed, wind direction, etc. Accordingly, a control system used for controlling operations of a wind turbine is normally connected to one or more sensors, each sensor being arranged to measure a specific surrounding condition, such for example the wind speed. However, the measurements of the physical parameter, such as the wind speed are often disturbed by the wind turbine and are only reliable to a given extent. For example, a wind speed sensor is normally placed on the nacelle and is disturbed by the rotor and is not able to detect the differences along the area swept by the rotor. Attempts have been made to rely on the sensors for detecting the blade deflection such as for example in GB 2,465,790 and US 2006/000269.

The often poor reliability of the information retrieved through the conventional sensors prejudice a fine control of the wind turbine.

It is an object of the present invention to provide a wind turbine that can be easily and finely controlled.

According to the present invention there is provided a wind turbine comprising a rotor rotatable about a rotor axis and having a plurality of blades rotatably fitted to a hub about a blade axis and a plurality of pitch actuators for adjusting the pitch angles of the blades; a brake controlled by a brake actuator for arresting the rotor; a rotating electric machine connected to the rotor; an inverter for controlling the rotating electric machine; and a control system, which comprises a plurality of image reflection measuring devices configured for detecting the deformations of each blade, and is configured to emit control signals for selectively controlling at least one of the pitch actuators; the brake actuator; and the inverter as a function of deformations retrieved by means of the plurality of image reflection measuring devices; wherein each image reflection measuring device is located inside a blade and comprises a light source, at least two light reflectors spaced apart along the blade axes for reflecting beams, and a camera for receiving the reflected light and emitting signals correlated to the retrieved images.

The reliable information retrieved by the image reflection measuring devices associated to all blades of the rotor allows retrieving several operational parameters regarding the rotor. This information turns to be extremely valuable in order to finely control the wind turbine.

This arrangement allows retrieving, for each blade, relevant information regarding at least two portions of each blade. Advantageously the light reflectors are spaced apart along the blade axes and located at given distances from the rotor axes; the light reflectors are distributed with the same spacing and the same distances from the rotor axis in each blade.

Accordingly the static and dynamic deformations of each blade can be significantly compared to the static and dynamic deformations of the other blades.

In accordance to a preferred embodiment of the present invention each blade comprises a root portion, a intermediate portion, and a tip portion having a structure configured to favour the twist of the tip portion with respect to the intermediate portion when the tip portion is loaded transversely to the blade axis; the blade being provided with at least one light reflector in the intermediate portion and at least one light reflector in the tip portion.

The tip portions of each blade may automatically twist when the load applied to the tip portion exceeds a given value. The light reflector in the tip portion can retrieve the occurrence of this event and the extent of the twist with respect to the intermediate portion and to the root portion so as to permit evaluating further adjustment of the pitch angle of the blade.

According to a further preferred embodiment each blade of the rotor is provided with at least one actuated aerodynamic surface such as a flap pivotally connected to the structure of the blade and extending along the trailing edge of the tip portion.

The adjustment of the actuated aerodynamic surface allows varying the distribution of the load along the blade. In particular, the actuated aerodynamic surface is positively actuated and is associated to a further light reflector of the image reflection measuring device so as to allow controlling the position of the actuated aerodynamic surface.

In accordance to a variation the additional light reflector is mounted on the blade structure such the spar in close proximity to the actuated aerodynamic surface in order to retrieve the effects produced by the actuation of the actuated aerodynamic surface.

According to a preferred embodiment of the present invention the control system comprises a plurality of image-processing units, which emit a set of position signals correlated to the positions of the light reflectors in the blades; and a signal-processing unit configured to run a plurality of programmes processing the complete set of position signals or subsets of the set of position signals and emitting said control signals.

In particular, the control system is configured to acquire further signals such as a speed signal correlated to the rotational speed of the rotor; said programmes including a rotor imbalance detecting programme configured to detect the misalignment of the rotor axis with respect to a nominal position of the rotor axis on the bases of oscillation signals derived from the set of position signals and the speed signal.

According to the second aspect of the invention, there is provided a control method for controlling operation of a wind turbine.

According to the present invention there is provided a control method for controlling the operational parameter of the wind turbine, wherein the wind turbine comprises a rotor rotatable about a rotor axis and having a plurality of blades rotatably fitted to a hub about a blade axis and a plurality of pitch actuators for adjusting the pitch angles of the blades; a brake controlled by a brake actuator for arresting the rotor; a rotating electric machine connected to the rotor; an inverter for controlling the rotating electric machine; and a control system, which comprises a plurality of image reflection measuring devices configured for detecting the deformations of each blade; the method comprising the steps of retrieving the deformations of the plurality of the blades; emitting control signals as a function of the deformations retrieved by means of the plurality of image reflection measuring devices; selectively controlling at least one of the pitch actuators, the brake actuator, and the inverter by means of the control signals; emitting a set of position signals correlated to the position of at least two light reflectors located inside each blade of the plurality of blades by means of a plurality of image-processing units; and processing the set of position signals or subset of the set of position signals by means of a plurality of programmes for calculating and emitting said control signals.

Only those position signals that are significant for a given operational control parameter under control are selected in order to reduce the number of operation required.

According to a preferred embodiment of the present invention the method comprises the steps of comparing the position signals correlated to the deformation of one blade to threshold values; and emitting a control signal for controlling the pitch actuator of said blade or for arresting the wind turbine when one of the position signals exceeds the related threshold value.

This control allows preserving the integrity of the blade and is preferably run for each blade of the rotor.

According to a further preferred embodiment the method comprises the steps of processing the subset of position signals of each blade through time in order to retrieve the oscillations of the blade and determine frequencies and amplitudes of each oscillation; comparing the oscillation frequencies with reference values in order to avoid critical oscillation frequencies; and emitting a control signal for controlling the pitch actuator in order to modify the oscillation frequency of the blade when the oscillation frequencies fall within a critical range.

Also this embodiment aim at preserving the blades and reducing critical stresses of the blades.

A preferred embodiment of the present invention envisages processing the entire set of position signals of all blades; calculating the overall deformation of the rotor on the bases of the deviations from the neutral position values of all blades; comparing the overall deformation of the rotor and a reference threshold value; and emitting a control signal for actuating the pitch actuators of all blades when the overall deformation of the rotor exceeds this reference threshold value.

The above preferred embodiment aims at avoiding excessive stresses on the entire structure of the wind turbine such as the vertical structure, the nacelle, the bearing etc.

A further preferred embodiment of the present invention envisages processing the subset of position signals of at least one blade for calculating the oscillation frequencies of the blade; acquiring the energy output of the rotating electric machine; comparing the calculated oscillation frequencies at said energy output with the natural oscillation frequencies of said blade at the same energy output in absence of ice; and emitting a control signal for arresting the wind turbine and/or start a de-icing programme when the differences between the calculated frequencies and the natural frequencies exceed given threshold values.

Advantageously the comparison between the natural oscillation frequencies and the retrieved frequencies at the same operational conditions gives information regarding the presence of ice on the blade.

A further preferred embodiment of the present invention comprises the steps of processing a subset of position signals in order to calculate the oscillations (amplitudes and frequencies) of at least one blade; and emitting a control signal for adjusting the inverter and or the pitch of one or more blades when the differences of oscillations (amplitudes and frequencies) though time exceeds a given range and the rotor rotates at constant rotational speed.

Such a control allows detecting the rotor unbalance and correcting the rotor unbalance.

According to a preferred embodiment of the present invention the method comprises the steps of comparing the position signals associated to said two light reflectors for calculating the twist of the tip portion with respect to the intermediate portion of one blade; and emitting a control signal for controlling the pitch actuator of said blade and adjusting the pitch angle of said blade when the twist is outside a given range.

The twist monitoring is relevant for the control of the blade otherwise the automatic twist determined by the load on blade would be out of control.

According to a further preferred embodiment of the present invention the method comprises the step of acquiring the position of said aerodynamic actuated surface and their effects on blade load.

The invention will now be described in further detail with reference to preferred embodiments shown in the enclosed drawings in which:
- Fig. 1 is a side elevation view, with parts removed for clarity, of a wind turbine according to the present invention;
- Fig. 2 is a side view, with parts removed for clarity, of a blade of the wind turbine of Figure 1;
- Fig. 3 is a cross-sectional view, with part removed for clarity and in an enlarged scale, of the blade of figure 2;
- Figures 4 and 5 are perspectives views, with parts removed for clarity and in an enlarged scale, of two respective sections of the blade of figure 2;
- Figure 6 is a schematic view of a control system of the wind turbine of figure 1;
- Figure 7 is perspective view, with parts removed for clarity and parts in cross-section of a variation of the blade of figure 2; and
- Figure 8 is a cross-sectional view, with parts removed for clarity, of the blade of figure 7.

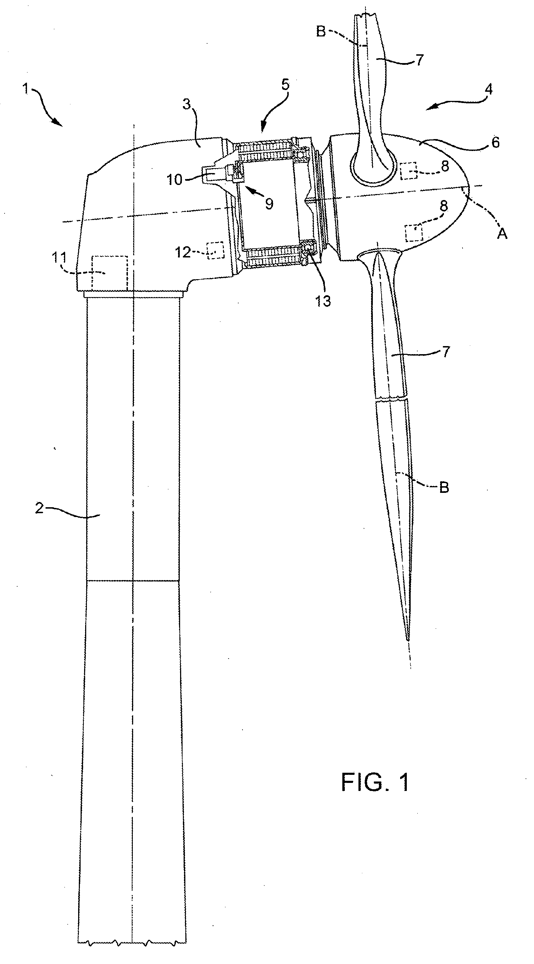

With reference to Fig. 1, with numeral 1 is indicated a wind turbine, in particular for the production of electric energy. The wind turbine 1 comprises a vertical structure 2; a nacelle 3 atop the vertical structure 2; a rotor 4 rotatably fitted to the nacelle 3 about an axis A; and a rotating electrical machine 5 partly fitted to the rotor 4 and partly fitted to the nacelle 3. The rotor 4 comprises a hub 6 and a plurality of blades 7, three in the example shown, rotatably mounted to the hub 6 about axes B extending radially from axis A; and a plurality of pitch actuators 8 for selectively rotating each blade 7 about axis B and adjusting the pitch angles of the same. The wind turbine 1 comprises a brake 9 selectively controlled by a brake actuator 10 for locking the rotor 4 with respect to the nacelle 3, and an inverter 11 for controlling the rotating electric machine 5. The wind turbine 1 comprises a speed sensor 12 for detecting the rotational speed of the rotor 4.

The wind turbine 1 of figure 1 is of the type having a single bearing 13 supporting the entire rotor 4, and a rotating electrical machine 5 of tubular shape.

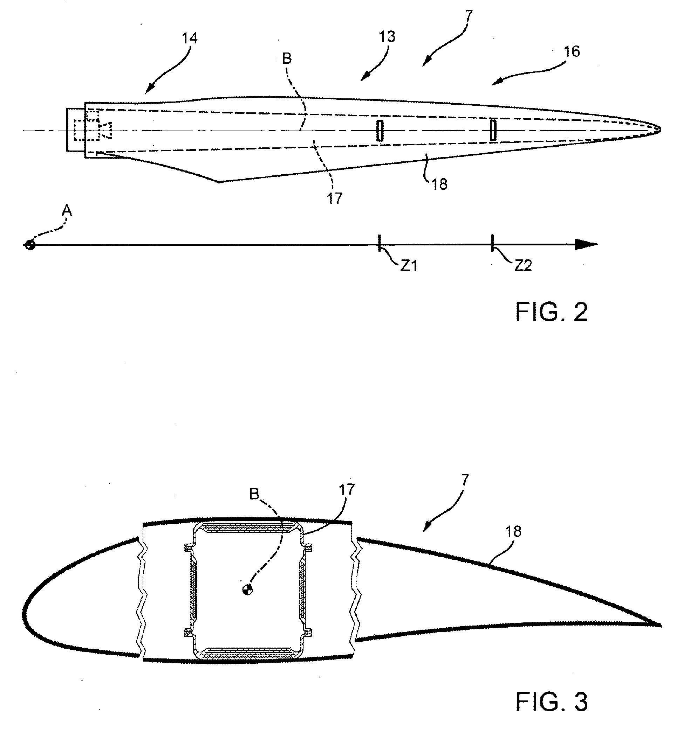

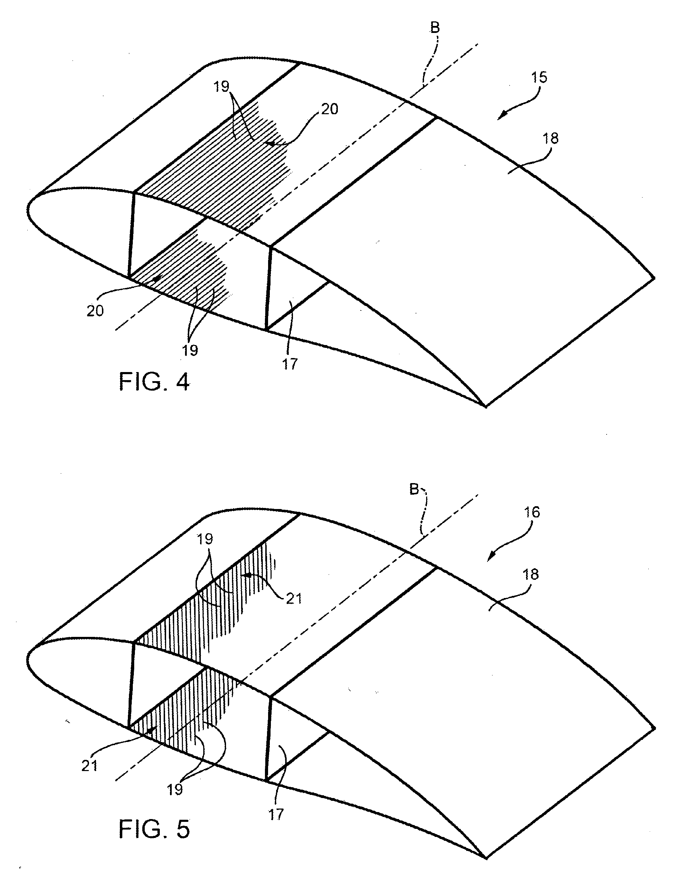

With reference to figure 2 each blade 7 has a root portion 14, a intermediate portion 15, and a tip portion 16; and comprises a longitudinal spar 17 extending along axis B from root portion 14 to tip portion 16, and an airfoil-shaped structure 18, which is arranged about the spar 17 and is supported by the spar 17. As better shown in figure 3, the spar 17 has a rectangular cross-section and confers the required stiffness to the blade 7 and transmits the load from the airfoil-shaped structure 18 to the hub 6 (figure 1). The spar 17 and the airfoil-shaped structure 18 are made of fibres-reinforced polymer in order to adequately withstand traction and compression stresses determined by the deformation of the blade 7 that normally occurs during the ordinary use of the wind turbine 1. The current tendency consists in increasing the length of the radius of the rotor 4 in order to increase the power transferred to the rotating electric machine 5. For this reason, a blade 7 may be even longer than 100 meters. Therefore, the structure of blade 7 should be elastic and resistant. The arrangements and the numbers of fibres in the spar 15 have a relevant influences to determine the elastic deformations of the blade 7 along axis B. Usually the fibres are laid in layers in several directions so as to form a fibre matt with uniform pattern. With reference to figure 4, a section of blade 7 shows that the fibres 19 of the spar 17 are arranged according to pattern 20 wherein the fibres 19 are prevalently parallel to axis B, whereas in figure 5 the fibres 19 are arranged according to a pattern 21 wherein the fibres 19 are prevalently inclined with respect to axis B. The pattern 20 of figure 4 offers a resistance to traction stresses that turns into a resistance to bending of blade 7 in response to a load applied perpendicularly to axis B. The pattern 21 of figure 5 favours the twist of the blade 7 as a reaction to a load applied perpendicularly to axis B. In use, the pattern 20 of figure 4 and pattern 21 of figure 5 allow elastic deformation of the blade 7 but cause the blade 7 to undergo different types of elastic deformations when loaded transversely to axis B.

With reference to figure 2, the spar 17 is provided with fibres arranged according to pattern 20 along the root portion 14 and the intermediate portion 15, and fibres arranged according to the pattern 21 along the tip portion 16. This combination of pattern 20 and 21 permits the tip portion 16 to twist with respect to intermediate portion 15 when high bending moments act on the blade 7.

This arrangement determines that the intermediate portion 15 undergoes elastic bending, whereas the tip portion 16 undergoes elastic twist deformation in addition of the deflection when the blade 7 is subject to loads perpendicular to the axis B.

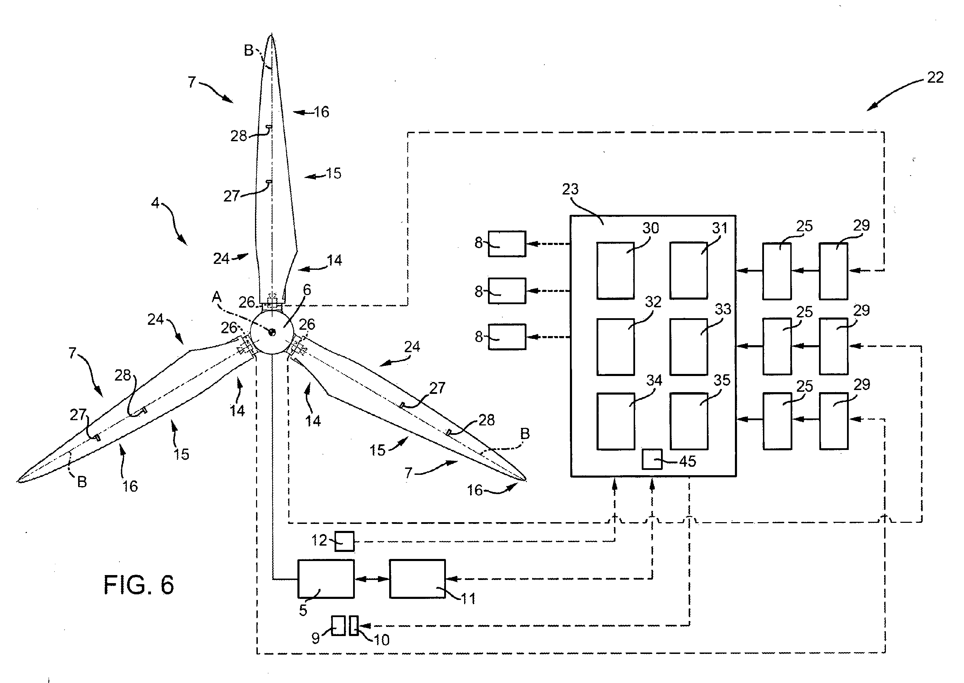

With reference to figure 6, the wind turbine 1 comprises a control system 22 for controlling the wind turbine 1 on the bases of a plurality of operational parameters. The control system 22 comprises a signal-processing unit 23; at least one image reflection measuring device 24 located inside each blade 7; and an image-processing unit 25 for each image reflection measuring device 24. The signal-processing unit 23 exchanges signals with the pitch actuators 8, the brake actuator 10, the inverter 11, the speed sensor 12, and the image-processing units 25.

With reference to figure 2, each image reflection measuring device 24 comprises a light source 26, such as a lamp configured to produce a diffused light inside the blade 7, a plurality of light reflectors 27 and 28, and one camera 29 on which the light, in particular the light reflected by light reflectors 27 and 28 impinges. The light source 26 lights the space inside the blade 7, in particular inside the spar 17. The light is prevalently reflected by the light reflectors 27 and 28 that appear to be light spots on greyish background in the image of the camera 29. The light reflected from the light reflectors impinges on a sensible area of the camera 29 which emit signals correlated to the images. The light reflectors 27 and 28 are preferably located in the cavity formed by the hollow spar 17 along the axis B. Light reflector 27 is located along the intermediate portion 15 at the distance Z1 from axis A, whereas light reflector 28 is located along the tip portion 16 at the distance Z2 from axis A, wherein Z2 is higher than Z1. In other words, light reflectors 27 and 28 are spaced apart along axis B. It is also convenient that light reflectors 27 and 28 are radially staggered with respect to axis B.

According to a preferred embodiment, the light reflectors 27 are located at the same distance Z1 form axis A in all blades 7 and the light reflectors 28 are located at the same distance Z2 in all blades 7 so that the deformations of each blade 7 can be significantly compared 7 with the deformations of the other blades.

With reference to figure 6, each image reflection measuring device 24 emits signals correlated to the retrieved images or, in other words, image-signals. Each image-processing unit 25 processes the image-signals emitted by a corresponding image reflection measuring device 24, and emits position signals correlated to the position of each light reflectors 27 and 28 in a corresponding blade 7. In other words, the image-processing unit 25 emits position signals Z1, X1(t), Y1(t) correlated to the position of the light reflector 27; and position signals Z2, X2(t), Y2(t) correlated to the position of the light reflector 28.

The image-processing units 25 emit in overall a set of position signals to be processed by the signal-processing unit 23 in order to retrieve information regarding the operational parameters of the wind turbine 1.

The signal-processing unit 23 is configured to elaborate the entire set of position signals, part of the same, and possibly signals emitted by the pitch actuators 8, the inverter 11 and the speed sensor 12. More in detail, the signal-processing unit 23 is configured to run a plurality of programmes each dedicated to the evaluation of an operational parameter on the bases of the at least some signals of the set of position signals and possibly additional signals acquired through the inverter 11 and/or the speed sensor 12.

The programmes stored in the signal-processing unit include the following:
- blade stress evaluation programme;
- blade fatigue evaluation programme;
- load calculation programme;
- ice detection programme;
- rotor unbalance detection programme;
- twist-bend coupling monitoring and control programme;
- Actuated aerodynamic surfaces monitoring and control programme.

The blade stress evaluation programme is indicated by block 30 in figure 6 and is aimed at evaluating whether each blade 7 is subject to stresses that can prejudice the integrity of the structure of the blade 7. Therefore, the position signals correlated to the deformation of each blade 7 are compared with threshold values in order to verify the occurrence of critical operational conditions for the blade 7. According to a preferred embodiment the deformations correspond to the displacement of the coordinates X, Y of one of the light reflectors 27 and 28 from a neutral position reference point. When one of the position signals X, Y exceeds a first threshold, the signal-processing unit 23 emits a control signal for controlling the pitch actuator 8 of the blade 7 in order to reduce the load on that blade 7. When one of the position signals X, Y exceeds a second threshold values, the signal-processing unit 23 emits a control signal for arresting the wind turbine 1, more precisely for actuating all pitch actuators 8, the brake actuator 10, and the inverter 11.

In other words, the blade stress evaluation programme is cyclically run for each blade 7 and may turn into an adjustment of the pitch angles of the blades 7. The blade stress evaluation programme is aimed at preserving the integrity of the blades 7 and avoiding excessive load on each blade 7.

The blade fatigue evaluation programme is indicated by block 31 in figure 6 and is configured for processing the subset of position signals of each blade 7 through time in order to retrieve the oscillations of the blade 7 and determine frequencies and amplitudes of each oscillation. The information retrieved is compared with reference values in order to avoid critical oscillation frequencies. In cases the oscillation frequency falls within a critical range, the signal-processing unit 23 emits a control signal for controlling the pitch actuators 8 in order to modify the oscillation frequency. In particular the fatigue evaluation programme is configured to calculate the fatigue loads of the blade during a certain period and to compare these loads whit expected loads retrieved through calculations. Form the comparison of the measured data and the expected data, modification on the control system can be made.

The blade fatigue evaluation programme 31 is run separately for each blade 7.

The load calculation programme is indicated by block 32 in figure 6 and is configured to process the entire set of position signals of all blades 7, and comprises the step of calculating the overall deformation on the bases of the deviations from the neutral positions of the light reflectors 27 and 28 of all blades 7. The higher the overall deformation, the higher the load applied to the rotor 4. A comparison between the overall deformation and a reference threshold value may be implemented in order to run the wind turbine 1 below this reference threshold value. In this case, the pitch actuator 8 of all blades 7 can be actuated in order to adjust the pitch angles for reducing the overall load by means of control signals emitted by the signal-processing unit 23.

The ice detection programme is indicated by block 33 in figure 6 and is configured to compare the overall deformation of the blades 7, and the energy output by the rotating electric machine 5; and a reference system. The detection is based on the principle according to which ice on blades 7 changes the relationship between the load applied to the rotor and the natural frequencies in absence of ice. However, the load applied to the rotor is closely related to the energy output by the rotating electrical machine 5. Therefore, the ice detection programme evaluates the oscillation frequencies of the blades 7 in relation to the energy output by the rotating electrical machine 5 and the spectrum of the natural frequencies of the blades 7. When the variations of the frequencies of oscillation of the blades 7 with respect to the natural frequencies of oscillation of the blades 7 at same load on rotor 4 is significant (exceeds a given threshold), this variations can only be attributed to the different distribution of masses of the blades 7 caused by the icing formation along blades 7. When the ice detection programme 33 detects a deformation lower than expected according to the above-identified parameters and with reference to the energy output, the signal-processing unit 23 emits a control signal for arresting the wind turbine 1 and/or start a de-icing programme.

The rotor imbalance programme is indicated by block 34 in figure 6 and is aimed at retrieving whether the rotational axis A of the rotor 4 is inclined with respect to its nominal position (figure 1). This anomalous operative condition may occur and can be detected and corrected. The rotor imbalance programme 34 processes a subset of position signals in order to determine the oscillations (amplitudes and frequencies) of at least one blade 7 in relation to the rotational speed of the rotor 4. When the differences of oscillations (amplitudes and frequencies) though time exceed a given range and the rotor 4 rotates at constant rotational speed, the signal-processing unit 23 is configured to send a control signal aimed at correcting the imbalance by means of the inverter 11 and/or the adjustment of the pitch angle of one or more blades 7.

The twist-bend coupling monitoring and control programme is indicated by block 35 in figure 6 and is aimed at controlling the twist of the tip portion 16 of each blade 7. The twist-bend coupling monitoring and control programme 35 compares the position signals associated to light reflector 27 and the position signal associated to light reflector 28 in order to indentify the entity of the rotation of the tip portion 16 with respect to the intermediate portion 15. In case the retrieved twist does not fulfil the set operational conditions, the signal-processing unit 23 emits a control signal for controlling the pitch actuator 8 and adjusting the pitch angle of that blade 7. The twist-bend coupling monitoring and control programme 35 is run for each blade 7.

In this way, a plurality of controls and adjustments of the wind turbine 1 can be carried out, in a simple and reliable manner. The programmes 30, 31, 32, 33, 34, 35 may advantageously include the significant process of comparing the static and dynamic deformations of each blade 7 with the static and dynamic deformations of the other blades 7.

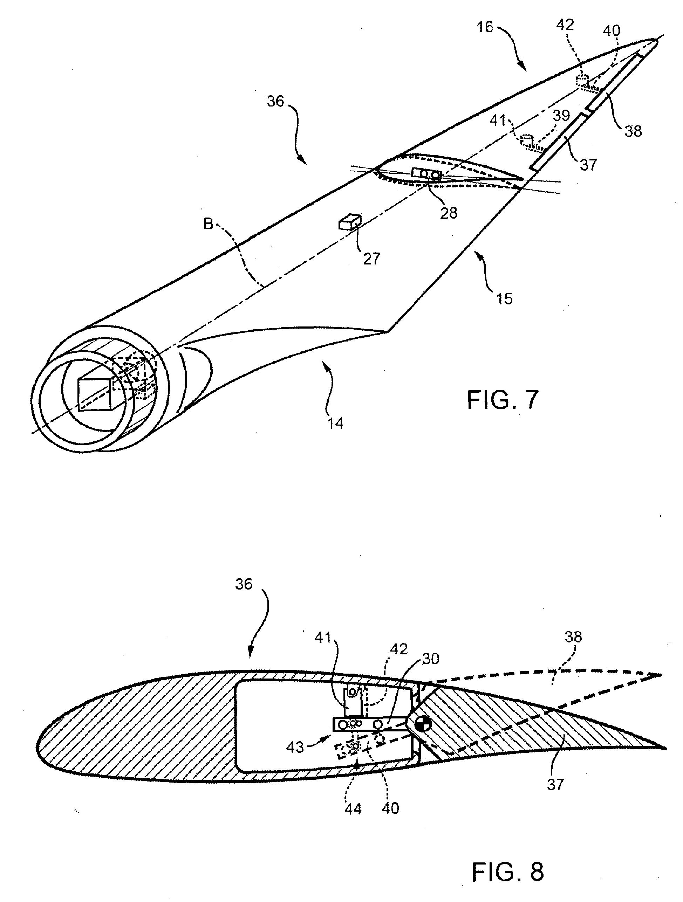

With reference to the embodiment shown in figures 7, reference numeral 36 indicates a blade having a structure substantially similar to blade 7, wherein similar components are identified by the same reference numerals adopted with reference to blade 7. In fact, blade 36 is a variation of blade 7 wherein the tip portion 16 includes actuated aerodynamic surface such as flaps 37 and 38 that are located along the trailing edge of blade 36 and can be positively controlled.

With reference to figure 8, flaps 37 and 38 are pivotally connected to the tip portion 16, are provided with respective arms 39 and 40 extending inside blade 36, and actuated by respective flap actuators 41 and 42 located inside blade 36.

With reference to figure 7, the flaps 37 and 38 can be actuated in order to favour the twist of the tip portion 16 with respect to the intermediate portion 15. The image reflection measuring device 24 comprises, in addition to light reflectors 27 and 28, further light reflectors 43 and 44 respectively placed on arms 39 and 40 in order to determine a relationship between the position of flaps 37 and 38 and the twist effect on the tip portion 16. The light reflectors 43 and 44 allow a closed loop control of the position of the flaps 37 and 38 in order to improve the accuracy of the positioning of flaps 37 and 38.

In figure 6 the signal-processing unit 23 is provided with a aerodynamic surface actuation and control programme 45 in order to finely control the flaps 37 and 38 and monitoring the reaction on the twist of the tip portion 16 of the blade 36.

The present invention obviously also extends to embodiments not described in the above detailed description, and to equivalent embodiments falling within the protective scope of the accompanying Claims.

## Claims

1. A wind turbine (1) comprising a rotor (4) rotatable about a rotor axis (A) and having a plurality of blades (7) rotatably fitted to a hub (6) about a blade axis (B) and a plurality of pitch actuators (8) for adjusting the pitch angles of the blades (7); a brake (9) controlled by a brake actuator (10) for arresting the rotor (4); a rotating electric machine (5) directly connected to the rotor (4); an inverter (11) for controlling the rotating electric machine (5); and a control system (22), which comprises a plurality of image reflection measuring devices (24) configured for detecting the deformations of each blade (7), and is configured to emit control signals for selectively controlling at least one of the pitch actuators (8); the brake actuator (10); and the inverter (11) as a function of the deformations retrieved by means of the plurality of the image reflection measuring devices (24); wherein each image reflection measuring device (24) is located inside a blade (7; 36) and comprises a light source (26), **characterised in that** it further comprises at least two light reflectors (27, 28; 27, 28, 43, 44) spaced apart along the blade axes (B) for reflecting beams, and a camera (29) for receiving the reflected light and emitting signals correlated to the retrieved images.

2. The wind turbine as claimed in Claim 1, wherein the light reflectors (27, 28; 27, 28, 43, 44) are spaced apart along the blade axes (B) and located at given distances from the rotor axes (A); the light reflectors (27, 28; 27, 28, 43, 44) are distributed with the same spacing and the same distances from the rotor axis (A) in each blade (7; 36).

3. The wind turbine as claimed in Claim 1 or 2, wherein each blade (7; 36) comprises a root portion (14), a intermediate portion (15), and a tip portion (16) having a structure configured to favour the twist of the tip portion (16) with respect to the intermediate portion (15) when the blade (7; 36) is loaded transversely to the blade axis (B); the blade (7; 36) being provided with at least one light reflector (27) in the intermediate portion (15) and at least one light reflector (28) in the tip portion (16).

4. The wind turbine as claimed in Claim 3, wherein the blade (36) is provided with at least one actuated surface, for example at least one flap (37, 38) pivotally connected to the blade (36) and extending along the trailing edge of the tip portion (16).

5. The wind turbine as claimed in Claim 4, wherein the flap (37, 38) is positively actuated and is being associated to a further light reflector (43, 44) of the image reflection measuring device (24) so as to allow controlling the position of the flap (37, 38).

6. The wind turbine as claimed in any one of the foregoing Claims, wherein the control system (22) comprises a plurality of image-processing units (25), which emit a set of position signals correlated to the positions of the light reflectors (27, 28; 27, 28, 43, 44) in the blades (7; 36); and a signal-processing unit (23) configured to run a plurality of programmes (30; 31, 32, 33, 34, 35, 45) for processing the complete set of position signals or subsets of the set of position signals and emitting said control signals.

7. A method for controlling of a wind turbine, wherein the wind turbine comprises a rotor (4) rotatable about a rotor axis (A) and having a plurality of blades (7; 36) rotatably fitted to a hub (6) about a blade axis (B) and a plurality of pitch actuators (8) for adjusting the pitch angles of the blades (7); a brake (9) controlled by a brake actuator (10) for arresting the rotor (4); a rotating electric machine (5) connected to the rotor (4); an inverter (11) for controlling the rotating electric machine (5); and a control system (22), which comprises a plurality of image reflection measuring devices (24) configured for detecting the deformations of each blade (7); the method comprising the steps of retrieving the deformation of the plurality of the blades (7; 27); emitting control signals correlated to the retrieved images as a function of the deformations retrieved by means of the plurality of the image reflection measuring devices (24); selectively controlling the pitch actuators (8), the brake actuator (10), and the inverter (11) by means of the control signals; emitting a set of position signals correlated to the position of at least two light reflectors (27, 28; 27, 28, 43, 44) located inside each blade (7; 36) of the plurality of blades (7; 36) by means of a plurality of image-processing units (25); and processing the set of position signals or subset of the set of position signals by means of a plurality of programmes (30; 31, 32, 33, 34, 35, 45) for calculating and emitting said control signals.

8. The method as claimed in Claim 7 further comprising the step of comparing the position signals correlated to the deformation of each blade (7) to threshold values; and emitting a control signal for controlling the pitch actuator (8) of the blade (7) or for arresting the wind turbine (1) when one of the position signals exceeds the related threshold value.

9. The method as claimed in claim 7 or 8 further comprising the steps of processing the subset of position signals of each blade (7) through time in order to retrieve the oscillations of the blade (7) and determine frequencies and amplitudes of each oscillation; comparing the oscillation frequencies with reference values in order to avoid critical oscillation frequencies; emitting a control signal for controlling the pitch actuator (8) in order to modify the oscillation frequency of the blade (7) when the oscillation frequencies falls within a critical range.

10. The method as claimed in any one of Claims from 7 to 9 further comprising the steps of processing the entire set of position signals of all blades (7); calculating the overall deformation of the rotor (4) on the bases of the deviations from the neutral position values of all blades (7); comparing the overall deformation of the rotor (4) and a reference threshold value; and emitting a control signal for actuating the pitch actuators (8) of all blades (7) when the overall deformation of the rotor (4) exceeds this reference threshold value.

11. The method as claimed in any one of the Claims from 7 to 10 further comprising the steps of processing the subset of position signals of at least one blade (7) for calculating the oscillation frequencies of the blade (7); acquiring the energy output by the rotating electric machine (5); comparing the calculated oscillation frequencies at said energy output with the natural oscillation frequencies at the same energy output in absence of ice; and emitting a control signal for arresting the wind turbine (1) and/or start a de-icing programme when the differences between the calculated frequencies and the natural frequencies exceed given threshold values.

12. The method as claimed in any one of the Claims from 7 to 11 further comprising the steps of processing a subset of position signals in order to calculate the oscillations (amplitudes and frequencies) of at least one blade (7; and emitting a control signal for adjusting the inverter (11) and or the pitch of one or more blades (7) when the differences of oscillations (amplitudes and frequencies) through time exceed a given range and the rotor (4) rotates at constant rotational speed.

13. The method as claimed in any one of the Claims from 7 to 12, wherein each blade (7; 36) comprises a root portion (14), an intermediate portion (15), and a tip portion (16) having a structure configured to favour the twist of the tip portion (16) with respect to the intermediate portion (15) when the blade (7; 36) is loaded transversely to the blade axis (B); the blade (7; 36) being provided with at least one light reflector (27) in the intermediate portion (15) and at least one light reflector (28) in the tip portion (16); the method further comprising the steps of comparing the position signals associated to said light reflectors (27, 28) for calculating the twist of the tip portion (16) with respect to the intermediate portion (15) of one blade (7); and emitting a control signal for controlling the pitch actuator (8) of said blade (7) and adjusting the pitch angle of said blade (7) when the twist is outside a given range.

14. The method as claimed in any one of the Claims from 7 to 12, wherein each blade (36) is provided with at least one aerodynamic actuated surface, for example at least one flap (37, 38) pivotally connected to the blade (36) and extending along the trailing edge of the tip portion (16) the aerodynamic actuated surface is connected to at least one further light reflector (43, 44); the method comprising the step of acquiring the position of said aerodynamic actuated surface.

15. The method as Claimed in any one of the Claims from 7 to 9 comprising the step of comparing the deformations of each blade (7; 36) with the deformations of the other blades (7, 36) of the rotor (4).

## Patentansprüche

1. Windturbine (1) mit einem Rotor (4), der um eine Rotorachse (A) drehbar ist und mehrere Blätter (7), die drehbar an einer Nabe (6) um eine Blattachse (B) angebracht sind, und mehrere Steigungsaktoren (8) zum Anpassen der Steigungswinkel der Blätter (7) aufweist; einer Bremse (9), die von einem Bremsaktor (10) zum Anhalten des Rotors (4) gesteuert wird; einer rotierenden elektrischen Maschine (5), die direkt mit dem Rotor (4) verbunden ist; einem Umrichter (11) um Steuern der rotierenden elektrischen Maschine (5); und einem Steuersystem (22), das mehrere Bildreflexionsmessvorrichtungen (24) umfasst, die zum Detektieren der Deformationen jedes Blatts (7) ausgelegt sind, und das ausgelegt ist, um Steuersignale zum selektiven Steuern mindestens eines von Steigungsaktoren; Bremsaktor (10) und Umrichter (11) als Funktion der Verformungen, die mittels der mehreren Bildreflexionsmessvorrichtungen (24) erfasst werden, auszugeben; wobei sich jede Bildreflexionsmessvorrichtung (24) in einem Blatt (7; 36) befindet und eine Lichtquelle (26) umfasst, **dadurch gekennzeichnet, dass** sie weiterhin umfasst: mindestens zwei Lichtreflektoren (27, 28; 27, 28, 43, 44), die entlang der Blattachsen (B) zum Reflektieren von Strahlen beabstandet sind, und eine Kamera (29) zum Aufnehmen des reflektierten Lichts und Ausgeben von Signalen, die mit den erfassten Bildern korreliert sind.

2. Windturbine nach Anspruch 1, wobei die Lichtreflektoren (27, 28; 27, 28, 43, 44) entlang der Blattachsen (B) beabstandet sind und sich bei vorgegebenen Entfernungen von den Rotorachsen (A) befinden; die Lichtreflektoren (27, 28; 27, 28, 43, 44) mit dem gleichen Abstand und den gleichen Entfernungen von der Rotorachse (A) in jedem Blatt (7; 36) verteilt sind.

3. Windturbine nach Anspruch 1 oder 2, wobei jedes Blatt (7; 36) einen Fußabschnitt (14), einen mittleren Abschnitt (15) und einen vorderen Abschnitt (16) mit einer Struktur umfasst, die ausgelegt ist, um das Verdrehen des vorderen Abschnitts (16) bezüglich des mittleren Abschnitts (15) zu begünstigen, wenn das Blatt (7; 36) quer zu der Blattachse (B) beansprucht wird; wobei das Blatt (7; 36) in dem mittleren Abschnitt (15) mit mindestens einem Lichtreflektor (27) und in dem vorderen Abschnitt (16) mit mindestens einem Lichtreflektor (28) versehen ist.

4. Windturbine nach Anspruch 3, wobei das Blatt (36) mit mindestens einer betätigten Fläche, zum Beispiel mindestens einer Klappe (37; 38) versehen ist, die mit dem Blatt (36) schwenkend verbunden ist und sich entlang des hinteren Rands des vorderen Abschnitts (16) erstreckt.

5. Windturbine nach Anspruch 4, wobei Klappe (37, 38) zwangsbetätigt wird und einem weiteren Lichtreflektor (43, 44) der Bildreflexionsmessvorrichtung (24) zugeordnet ist, um ein Steuern der Position der Klappe (37, 38) zu erlauben.

6. Windturbine nach einem der vorhergehenden Ansprüche, wobei das Steuersystem (22) mehrere Bildverarbeitungseinheiten (25), die einen Satz von Positionssignalen, die mit den Positionen der Lichtreflektoren (27, 28; 27, 28, 43, 44) in den Blättern (7; 36) korreliert sind, und eine Signalverarbeitungseinheit (23), die ausgelegt ist, um mehrere Programme (30; 31, 32, 33, 34, 35, 45) zum Verarbeiten des kompletten Satzes an Positionssignalen oder Teilsätzen des Satzes an Positionssignalen laufenzulassen, und die Steuersignale ausgibt, umfasst.

7. Verfahren zum Steuern einer Windturbine, wobei die Windturbine umfasst: einen Rotor (4), der um eine Rotorachse (A) drehbar ist und mehrere Blätter (7; 36), die drehbar an einer Nabe (6) um eine Blattachse (B) angebracht sind, und mehrere Steigungsaktoren (8) zum Anpassen der Steigungswinkel der Blätter (7) aufweist; eine Bremse (9), die von einem Bremsaktor (10) zum Anhalten des Rotors (4) gesteuert wird; eine rotierende elektrische Maschine (5), die mit dem Rotor (4) verbunden ist; einen Umrichter (11) um Steuern der rotierenden elektrischen Maschine (5); und ein Steuersystem (22), das mehrere Bildreflexionsmessvorrichtungen (24) umfasst, die zum Detektieren der Verformungen jedes Blatts (7) ausgelegt sind; wobei das Verfahren die Schritte des Erfassens der Verformung der mehreren Blätter (7; 27); des Ausgebens von Steuersignalen, die mit den erfassten Bildern korreliert sind, als Funktion der Verformungen, die mittels der mehreren Bildreflexionsmessvorrichtungen (24) erfasst werden; des selektiven Steuerns der Steigungsaktoren (8), des Bremsaktors (10) und des Umrichters (11) mittels der Steuersignale; des Ausgebens eines Satzes von Positionssignalen, die mit der Position von mindestens zwei Lichtreflektoren (27, 28; 27, 28, 43, 44) korreliert sind, die sich in jedem Blatt (7; 36) der mehreren Blätter (7; 36) befinden, mittels mehreren Bildverarbeitungseinheiten (25); und des Verarbeitens des Satzes von Positionssignalen oder des Teilsatzes des Satzes von Positionssignalen mittels mehrerer Programme (30; 31, 32, 33, 34, 35, 45) zum Berechnen und Ausgeben der Steuersignale umfasst.

8. Verfahren nach Anspruch 7, welches weiterhin den Schritt des Vergleichens der Positionssignale, die mit der Verformung jedes Blatts (7) korreliert sind, mit Schwellenwerten; und des Ausgebens eines Steuersignals zum Steuern des Steigungsaktors (8) des Blatts (7) oder zum Anhalten der Windturbine (1), wenn eines der Positionssignale den zugehörigen Schwellenwert übersteigt, umfasst.

9. Verfahren nach Anspruch 7 oder 8, welches weiterhin die Schritte des Verarbeitens des Teilsatzes von Positionssignalen jedes Blatts (7) mit Zeit, um die Schwingungen des Blatts (7) zu erfassen und Frequenzen und Amplituden jeder Schwingung zu ermitteln; des Vergleichens der Schwingungsfrequenzen mit Bezugswerten, um kritische Schwingungsfrequenzen zu vermeiden; des Ausgebens eines Steuersignals zum Steuern des Steigungsaktors (8), um die Schwingungsfrequenz des Blatts (7) abzuwandeln, wenn die Schwingungsfrequenzen in einen kritischen Bereich fallen, umfasst.

10. Verfahren nach einem der Ansprüche 7 bis 9, welches weiterhin die Schritte des Verarbeitens des gesamten Satzes an Positionssignalen aller Blätter (7); des Berechnens der gesamten Verformung des Rotors (4) anhand der Abweichungen von den neutralen Positionswerten aller Blätter (7); des Vergleichens der gesamten Verformung des Rotors (4) und eines Bezugsschwellenwerts; und des Ausgebens eines Steuersignals zum Betätigen der Steigungsaktoren (8) aller Blätter (7), wenn die gesamte Verformung des Rotors (4) diesen Bezugsschwellenwert übersteigt, umfasst.

11. Verfahren nach einem der Ansprüche 7 bis 10, welches weiterhin die Schritte des Verarbeitens des Teilsatzes von Positionssignalen mindestens eines Blatts (7) zum Berechnen der Schwingungsfrequenzen des Blatts (7); des Erfassens der von der rotierenden elektrischen Maschine (5) ausgegebenen Energie; des Vergleichens der berechneten Schwingungsfrequenzen bei der Energieabgabe mit den natürlichen Schwingungsfrequenzen bei der gleichen Energieabgabe bei Fehlen von Eis; und des Ausgebens eines Steuersignals zum Anhalten der Windturbine (1) und/oder zum Starten eines Enteisungsprogramms, wenn die Differenzen zwischen den berechneten Frequenzen und den natürlichen Frequenzen vorgegebene Schwellenwerte übersteigen, umfasst.

12. Verfahren nach einem der Ansprüche 7 bis 11, welches weiterhin die Schritte des Verarbeitens eines Teilsatzes von Positionssignalen, um die Schwingungen (Amplituden und Frequenzen) mindestens eines Blatts (7) zu berechnen; und des Ausgebens eines Steuersignals zum Anpassen des Umrichters (11) und/oder der Steigung eines oder mehrerer Blätter (7), wenn die Schwingungsdifferenzen (Amplituden und Frequenzen) mit Zeit einen vorgegebenen Bereich übersteigen und der Rotor (4) bei konstanter Drehzahl dreht, umfasst.

13. Verfahren nach einem der Ansprüche 7 bis 12, wobei jedes Blatt (7; 36) einen Fußabschnitt (14), einen mittleren Abschnitt (15) und einen vorderen Abschnitt (16) mit einer Struktur umfasst, die ausgelegt ist, um das Verdrehen des vorderen Abschnitts (16) bezüglich des mittleren Abschnitts (15) zu begünstigen, wenn das Blatt (7; 36) quer zu der Blattachse (B) beansprucht wird; wobei das Blatt (7; 36) in dem mittleren Abschnitt (15) mit mindestens einem Lichtreflektor (27) und in dem vorderen Abschnitt (16) mit mindestens einem Lichtreflektor (28) versehen ist; wobei das Verfahren weiterhin die Schritte des Vergleichens der Positionssignale, die den Lichtreflektoren (27, 28) zugeordnet sind, zum Berechnen der Verdrehung des vorderen Abschnitts (16) bezüglich des mittleren Abschnitts (15) eines Blatts (7); und des Ausgebens eines Steuersignals zum Steuern des Steigungsaktors (8) des Blatts (7) und zum Anpassen des Steigungswinkels des Blatts (7), wenn die Verdrehung außerhalb eines vorgegebenen Bereichs liegt, umfasst.

14. Verfahren nach einem der Ansprüche 7 bis 12, wobei jedes Blatt (36) mit mindestens einer aerodynamischen betätigten Fläche, zum Beispiel mindestens einer Klappe (37, 38), versehen ist, die mit dem Blatt (36) schwenkend verbunden ist und sich entlang des hinteren Rands des vorderen Abschnitts (16) erstreckt, die aerodynamische betätigte Fläche mit mindestens einem weiteren Lichtreflektor (43, 44) verbunden ist; wobei das Verfahren den Schritt des Erfassens der Position der aerodynamischen betätigten Fläche umfasst.

15. Verfahren nach einem der Ansprüche 7 bis 9, welches den Schritt des Vergleichens der Verformungen jedes Blatts (7; 36) mit den Verformungen der anderen Blätter (7, 36) des Rotors (4) umfasst.

## Revendications

1. Turbine éolienne (1) comprenant un rotor (4) pouvant tourner autour d'un axe de rotor (A) et possédant une pluralité de pales (7) montées sur un moyeu (6) de façon à pouvoir tourner autour d'un axe de pale (B) et une pluralité d'actionneurs de pas (8) destinés à ajuster les angles de pas des pales (7) ; un frein (9) commandé par un actionneur de frein (10) et destiné à arrêter le rotor (4) ; une machine électrique tournante (5) directement reliée au rotor (4) ; un onduleur (11) destiné à commander la machine électrique tournante (5) ; et un système de commande (22) qui comprend une pluralité de dispositifs de mesure de réflexion d'image (24) configurés pour détecter les déformations de chaque pale (7), et qui est configuré pour émettre des signaux de commande destinés à commander sélectivement au moins un des actionneurs de pas (8) ; l'actionneur de frein (10) ; et l'onduleur (11) en fonction des déformations détectées au moyen de la pluralité de dispositifs de mesure de réflexion d'image (24) ; chaque dispositif de mesure de réflexion d'image (24) étant située à l'intérieur d'une pale (7, 36) et comprenant une source de lumière (26), **caractérisée en ce qu'**elle comprend en outre au moins deux réflecteurs de lumière (27, 28 ; 27, 28, 43, 44) espacés le long des axes de pale (B) et destinés à réfléchir des faisceaux, et une caméra (29) destinée à recevoir la lumière réfléchie et à émettre des signaux corrélés aux images récupérées.

2. Turbine éolienne selon la revendication 1, dans laquelle les réflecteurs de lumière (27, 28 ; 27, 28, 43, 44) sont espacées le long des axes de pale (B) et situés à des distances données par rapport aux axes de rotor (A) ; les réflecteurs de lumière (27, 28 ; 27, 28, 43, 44) sont réparties avec le même espacement et les mêmes distances par rapport à l'axe de rotor (A) de chaque pale (7 ; 36).

3. Turbine éolienne selon la revendication 1 ou 2, dans laquelle chaque pale (7 ; 36) comprend une portion de base (14), une portion intermédiaire (15), et une portion de pointe (16) ayant une structure configurée pour favoriser la torsion de la portion de pointe (16) par rapport à la portion intermédiaire (15) lorsque la pale (7 ; 36) est chargée transversalement par rapport à l'axe de pale (B) ; la pale (7 ; 36) étant pourvue d'au moins un réflecteur de lumière (27) dans la portion intermédiaire (15) et d'au moins un réflecteur de lumière (28) dans la portion de pointe (16).

4. Turbine éolienne selon la revendication 3, dans laquelle la pale (36) est pourvue d'au moins une surface d'actionnement, par exemple d'au moins un volet (37, 38) relié de façon pivotante à la pale (36) et s'étendant le long du bord arrière de la portion de pointe (16).

5. Turbine éolienne selon la revendication 4, dans laquelle le volet (37, 38) est actionné positivement et est associé à un autre réflecteur de lumière (43, 44) du dispositif de mesure de réflexion d'image (24) de façon à permettre le contrôle de la position du volet (37, 38).

6. Turbine éolienne selon l'une quelconque des revendications précédentes, dans laquelle le système de commande (22) comprend une pluralité d'unités de traitement d'image (25) qui émettent un ensemble de signaux de position corrélés aux positions des réflecteurs de lumière (27, 28 ; 27, 28, 43, 44) dans les pales (7 ; 36) ; et une unité de traitement de signal (23) configurée pour exécuter une pluralité de programmes (30 ; 31, 32, 33, 34, 35, 45) destinés à traiter l'ensemble complet de signaux de position ou de sous-ensembles de l'ensemble de signaux de position et à émettre lesdits signaux de commande.

7. Procédé destiné à commander une turbine éolienne, dans lequel la turbine éolienne comprend un rotor (4) pouvant tourner autour d'un axe de rotor (A) et possédant une pluralité de pales (7 ; 36) monté sur un moyeu (6) de façon à pouvoir tourner autour d'un axe de pale (B) et une pluralité d'actionneurs de pas (8) destinés à ajuster les angles de pas des pales (7) ; un frein (9) commandé par un actionneur de frein (10) et destiné à arrêter le rotor (4) ; une machine électrique tournante (5) reliée au rotor (4) ; un onduleur (11) destiné à commander la machine électrique tournante (5) ; et un système de commande (22) qui, comprend une pluralité de dispositifs de mesure de réflexion d'image (24) configurés pour détecter les déformations de chaque pale (7) ; le procédé comprenant les étapes consistant à détecter la déformation de la pluralité de pales (7 ; 27) ; émettre des signaux de commande corrélés aux images récupérées en fonction des déformations détectées au moyen de la pluralité de dispositifs de mesure de réflexion d'image (24) ; commander de manière sélective les actionneurs de pas (8), l'actionneur de frein (10), et l'onduleur (11) au moyen des signaux de commande ; émettre un ensemble de signaux de position corrélés à la position d'au moins deux réflecteurs de lumière (27, 28 ; 27, 28, 43, 44) situés à l'intérieur de chaque pale (7 ; 36) de la pluralité de pales (7 ; 36) au moyen d'une pluralité d'unités de traitement d'image (25) ; et traiter l'ensemble de signaux de position ou le sous-ensemble de l'ensemble de signaux de position au moyen d'une pluralité de programmes (30 ; 31, 32, 33, 34, 35, 45) destinés à calculer et émettre lesdits signaux de commande.

8. Procédé selon la revendication 7, comprenant en outre l'étape consistant à comparer les signaux de position corrélés à la déformation de chaque pale (7) avec des valeurs de seuil ; et émettre un signal de commande pour commander l'actionneur de pas (8) de la pale (7) ou pour arrêter la turbine éolienne (1) lorsque l'un des signaux de position est supérieur à la valeur de seuil associée.

9. Procédé selon la revendication 7 ou 8, comprenant en outre les étapes consistant à traiter le sous-ensemble de signaux de position de chaque pale (7) dans le temps afin de détecter les oscillations de la pale (7) et de déterminer les fréquences et les amplitudes de chaque oscillation, comparer les fréquences d'oscillation avec des valeurs de référence afin d'éviter les fréquences d'oscillation critiques ; émettre un signal de commande pour commander l'actionneur de pas (8) afin de modifier la fréquence d'oscillation de la pale (7) lorsque les fréquences d'oscillation tombe dans d'une gamme critique.

10. Procédé selon l'une quelconque des revendications 7 à 9, comprenant en outre les étapes consistant à traiter l'ensemble des signaux de position de toutes les pales (7), calculer la déformation globale du rotor (4) en se fondant sur les écarts par rapport aux valeurs de position neutres de toutes les pales (7) ; comparer la déformation globale du rotor (4) et une valeur de seuil de référence ; et émettre un signal de commande pour actionner les actionneurs de pas (8) de toutes les pales (7) lorsque la déformation globale du rotor (4) dépasse cette valeur de seuil de référence.

11. Procédé selon l'une quelconque des revendications 7 à 10, comprenant en outre les étapes consistant à traiter le sous-ensemble de signaux de position d'au moins une pale (7) pour calculer les fréquences d'oscillation de la pale (7) ; acquérir l'énergie générée par la machine électrique tournante (5) ; comparer les fréquences d'oscillation calculées pour l'énergie générée avec les fréquences d'oscillation naturelles pour la même énergie en l'absence de glace ; et émettre un signal de commande pour arrêter la turbine éolienne (1) et/ou lancer un programme de dégivrage lorsque les différences entre les fréquences calculées et les fréquences propres dépassent des valeurs de seuil données.

12. Procédé selon l'une quelconque des revendications 7 à 11, comprenant en outre les étapes consistant à traiter un sous-ensemble de signaux de position afin de calculer les oscillations (amplitudes et fréquences) d'au moins une pale (7) ; et émettre un signal de commande pour ajuster l'inverseur (11) et/ou le pas d'une ou de plusieurs pales (7) lorsque les différences d'oscillations (amplitudes et fréquences) dans le temps dépassent une gamme donnée et que le rotor (4) tourne à une vitesse de rotation constante.

13. Procédé selon l'une quelconque des revendications 7 à 12, dans lequel chaque pale (7 ; 36) comprend une portion de base (14), une portion intermédiaire (15), et une portion de pointe (16) ayant une structure configurée pour favoriser la torsion de la portion de pointe (16) par rapport à la portion intermédiaire (15) lorsque la pale (7 ; 36) est chargée transversalement par rapport à l'axe de pale (B) ; la pale (7 ; 36) étant pourvue d'au moins un réflecteur de lumière (27) dans la portion intermédiaire (15) et d'au moins un réflecteur de lumière (28) dans la portion de pointe (16), le procédé comprenant en outre les étapes consistant à comparer les signaux de position associés auxdits réflecteurs de lumière (27, 28 ) pour calculer la torsion de la portion de pointe (16) par rapport à la portion intermédiaire (15) d'une pale (7) ; et émettre un signal de commande pour commander l'actionneur de pas (6) de ladite pale (7) et ajuster l'angle de pas de ladite pale (7) lorsque la torsion est en dehors d'une gamme donnée.

14. Procédé selon l'une quelconque des revendications 7 à 12, dans lequel chaque pale (36) est pourvue d'au moins une surface d'actionnement aérodynamique, par exemple d'au moins un volet (37, 38) relié de façon pivotante à la pale (36) et s'étendant le long du bord arrière de la portion de pointe (16), et dans lequel la surface d'actionnement aérodynamique est reliée à au moins un autre réflecteur de lumière (43, 44) ; le procédé comprenant l'étape consistant à acquérir la position de ladite surface d'actionnement aérodynamique.

15. Procédé selon l'une quelconque des revendications 7 à 9, comprenant l'étape consistant à comparer les déformations de chaque pale (7 ; 36) avec les déformations des autres pales (7, 36) du rotor (4) .
